Europäisches Patentamt

(19) **European Patent Office**

Office européen des brevets

(11) Numéro de publication: **0 083 549**
**B1**

(12) **FASCICULE DE BREVET EUROPEEN**

(45) Date de publication du fascicule du brevet:
**21.05.86**

(21) Numéro de dépôt: **82430041.2**

(22) Date de dépôt: **21.12.82**

(51) Int. Cl.⁴: **F 27 B 7/00, C 04 B 11/02**

(54) Four rotatif à haut rendement calorifique, pour la fabrication de plâtres.

---

(30) Priorité: **22.12.81 ES 508264**

(43) Date de publication de la demande:
**13.07.83 Bulletin 83/28**

(45) Mention de la délivrance du brevet:
**21.05.86 Bulletin 86/21**

(84) Etats contractants désignés:
**AT BE CH DE FR GB IT LI NL SE**

(56) Documents cités:
**BE - A - 656 801**
**DE - B - 1 106 237**
**FR - A - 1 212 037**
**FR - A - 1 292 406**
**FR - A - 1 353 434**
**FR - A - 2 113 045**
**US - A - 2 207 987**

(73) Titulaire: **TALLERES A. MONTERDE, S.A., calle Ramon y Cajal s/n, Molins De Rei (Barcelona) (ES)**

(72) Inventeur: **Monterde, Irene V., Calle Ramon y Cajal s/n, Molins de Rei (Barcelona) (ES)**

(74) Mandataire: **Marek, Pierre, 32, rue de la Loge, F-13002 Marseille (FR)**

---

LIBER, STOCKHOLM 1986

## Description

La présente invention concerne un four rotatif à haut rendement calorifique, pour la fabrication de plâtres, notamment de plâtres du type appelé anhydrite, ce four étant du genre comprenant un grand corps tubulaire cylindrique tournant ou corps central, obturé à l'une de ses extrémités ou extrémité arrière et coaxialement solidaire d'un second corps tubulaire cylindrique de diamètre plus important et de moindre longueur, qui s'étend sur la plus grande partie de la portée centrale dudit grand corps tubulaire cylindrique, ces deux corps tournants délimitant, entre eux, une chambre annulaire intermédiaire dont l'extrémité avant se trouve en communication avec une trémie d'enfournement du matériau à traiter et dont l'extrémité arrière communique avec l'intérieur dudit corps central par l'inter, mediaire de passages, ledit four comprenant encore des moyens destinés à assurer le cheminement du matériau en cours de traitement et disposés à l'intérieur de ladite chambre annulaire et dudit corps central, sur le trajet dudit matériau, des ouvertures de sortie pour le matériau traité, un brûleur et un foyer, des moyens d'appui et des moyens permettant son entraînement en rotation.

On sait qu'il existe divers types de plâtres lesquels sont obtenus à partir de gypse ou plâtre brut, au moyen de processus de cuisson appropriés. Jusqu'à ces derniers temps, le plâtre s'utilisait quasi exclusivement en application manuelle directe sur les murs, cloisons et plafonds, outre quelques autres utilisations secondaires telles que les utilisations artisanales d'importance quantitative négligeable. Cependant, des applications récentes rendues possibles par la modernisation des techniques, ont mis en évidence des avantages remarquables découlant de l'utilisation généralisée des plâtres spéciaux pour d'autres destinations telles que: production des plâtres aptes à être appliqués à l'aide de machines appropriées, imitations de marbres, revêtements, imperméabilisation d'extérieurs, crépissages, fabrication d'agglutinants, réalisation de pavages, etc. Ces plâtres spéciaux sont constitués par des mélanges de produits dans lesquels le plâtre appelé anhydrite intervient de façon déterminante et en quantités notables, en permettant l'obtention de produits présentant les propriétés requises pour les applications envisagées, ces propriétés se rattachant, par exemple, à la durée de prise, à la dureté, à la résistance mécanique, etc.

Ces récentes et multiples applications nécessitent la production de quantités croissantes de plâtres spéciaux, notamment d'anhydrite. Toutefois, les fours connus du genre susmentionné ne permettent pas d'obtenir des rendements élevés lorsqu'ils sont utilisés pour la production de plâtre anhydrite, tandis que, dans de nombreux cas, les fours rotatifs connus ne peuvent être utilisés pour la production de plâtres de types différents tels que, par exemple : plâtres semi-hydratés et plâtres anhydrites.

Un but poursuivit par la présente invention est, notamment, de remédier aux insuffisances des fours tournants existants.

Selon l'invention, ce but est atteint grâce à un four du genre susmentionné lequel est plus particulièrement remarquable par le fait qu'il comprend un troisième corps tubulaire cylindrique ou corps extérieur disposé, coaxialement, autour dudit second corps tubulaire cylindrique ou corps intermédiaire, ces corps intermédiaire et extérieur étant rigidement solidaires et délimitant, entre eux, une chambre annulaire d'évacuation, et par le fait qu'une portion dudit corps extérieur est disposée en avancée par rapport à l'extrémité antérieure du corps intermédiaire et cette portion disposée en avancée délimitant une enceinte annulaire située autour d'une portion du corps central pourvue d'au moins une ouverture de sortie, cette enceinte annulaire établissant une communication directe, par l'intermédiaire de ladite ouverture de sortie, entre le foyer et ladite chambre d'évacuation dont la partie arrière débouche, par l'intermédiaire d'un orifice d'évacuation, dans une trémie de sortie.

Grâce à ce mode de réalisation, le four selon l'invention a un rendement élevé découlant de l'échange de température supplémentaire obtenu entre le matériau brut introduit dans le four et circulant dans la chambre intermédiaire, en direction de l'intérieur du four, et le plâtre cuit cheminant dans la chambre d'évacuation, en direction de l'ouverture de sortie. En effet grâce à l'augmentation de température du matériau brut circulant dans la chambre intermédiaire résultant de son contact avec la paroi intérieure de la chambre annulaire d'évacuation parcourue par le plâtre cuit qui quitte le foyer à une température importante, le plâtre peut être porté à des températures très élevées lors de son passage à l'intérieur du four et dans le foyer, sans accroissement de la longueur dudit four et sans ralentissement de la vitesse de cheminement du matériau en cours de traitement. D'autre part, l'abaissement de la température du plâtre cuit circulant dans la chambre d'évacuation et résultant de son contact avec la paroi supérieure de la chambre annulaire intermédiaire parcourue par le matériau brut qui entre dans le four à une température relativement basse, est un facteur favorable pour les opérations ultérieures auxquelles peut être soumis le plâtre cuit telles que mélanges et manipulations de conditionnement, etc.

Les résultats susmentionnés sont encore améliorés grâce à une autre caractéristique du four rotatif suivant la présente invention selon laquelle ledit four comporte un quatrième corps tubulaire cylindrique ou corps périphérique disposé, coaxialement, autour du corps extérieur, ledit corps périphérique étant rigidement solidaire de l'ensemble des autres corps cylindriques tournants et délimitant, avec ledit corps extérieur, une chambre annulaire de préchauffage dont l'accés est assuré, de préférence, par une pluralité de bouches d'entrée, par exemple au nombre de six, distribuées à l'une des extrémités de ladite chambre de préchauffage, de façon que leurs réceptacles soient disposés en cascade; l'autre extrémite de ladite chambre de préchauffage communiquant avec la chambre intermédiaire entourée par la chambre annulaire d'évacuation, par l'intermédiaire de la ou des bouches d'entrée donnant accés à ladite chambre intermédiaire.

On obtient, au moyen de cet agencement complémentaire, un échange de température supplémentaire qui contribue grandement au haut rendement calorifique du four selon l'invention. En effet, le matériau brut enfourné est préchauffé lors de son parcours dans la chambre de préchauffage, en raison de son contact avec la paroi inférieure de ladite chambre laquelle constitue, en même temps, la paroi supérieure de la chambre annulaire d'évacuation parcourue par le plâtre cuit qui sort du foyer à une température trés élevée atteinte grâce à ce préchauffage. D'autre part, la présence, autour de la chambre d'évacuation, d'une chambre annulaire dans laquelle chemine le matériau enfourné à une température relativement basse, contribue grandement à abaisser la température du plâtre cuit sortant du foyer et circulant dans ladite chambre d'évacuation.

Les buts, caractéristiques et avantages susmentionnés, et d'autres encore, ressortiront mieux de l'exposé qui suit et des dessins annexés. Dans ces dessins, sont illustrés, uniquement à titre d'exemples de réalisation non limitatifs, deux modes d'exécution pratique d'un four rotatif à haut rendement calorifique pour la fabrication de plâtres, selon la présente invention.

La figure 1 est une vue de côté, en coupe longitudinale, d'un premièr exemple de réalisation de ce four. Cette figure a été divisée en deux parties afin de montrer le four à une échelle suffisante pour la représentation et la bonne compréhension de ses caractéristiques originales. La ligne A-B indique le plan virtuel de séparation entre les deux moitiés : la moitié gauche (partie supérieure de la vue) correspondant à la portion antérieure du four, tandis que la moitié droite (partie inférieure de la vue), correspond à la portion postérieure de ce dernier.

La figure 2 est une vue en coupe transversale selon la ligne II - II de la figure 1.

La figure 3 est une vue en coupe transversale suivant la ligne III - III de la figure 1.

La figure 4 est une vue en coupe transversale selon la ligne IV - IV de la figure 1.

La figure 5 est une vue en coupe transversale suivant la ligne V - V de la figure 1.

La figure 6 est une vue en coupe transversale selon la ligne VI - VI de la figure 1.

La figure 7 est une vue en coupe transversale suivant la ligne VII - VII de la figure 1.

La figure 8 est une vue en coupe transversale selon la ligne VIII - VIII de la figure 1.

La figure 9 est une vue de côté, en coupe longitudinale, d'un deuxiéme exemple de réalisation du four rotatif selon l'invention. Cette figure a également été divisée en deux parties afin de montrer le four à une échelle suffisamment importante pour la représentation claire et la bonne compréhension de ses caractéristiques originales. La ligne C-D indique le plan virtuel de séparation entre les deux moitiés : la moitié gauche (partie supérieure de la vue) correspondant à la portion antérieure du four, tandis que la moitié droite (partie inférieure de la vue) correspond à la portion postérieure de ce dernier.

La figure 10 est une vue en coupe transversale selon la ligne X - X de la figure 9.

La figure 11 est une vue en coupe transversale suivant la ligne XI - XI de la figure 9.

La figure 12 est une vue en coupe transversale selon la ligne XII - XII de la figure 9.

La figure 13 est une vue en coupe transversale suivant la ligne XIII - XIII de la figure 9.

La figure 14 est une vue en coupe transversale selon la ligne XIV - XIV de la figure 9.

La figure 15 est une vue en coupe transversale suivant la ligne XV - XV de la figure 9.

La figure 16 est une vue en coupe transversale selon la ligne XVI - XVI de la figure 9.

La figure 17 est une vue en coupe transversale suivant la ligne XVII - XVII de la figure 9.

La figure 18 est une vue en coupe transversale selon la ligne XVIII - XVIII de la figure 9.

On se réfère auxdits dessins pour décrire deux exemples d'exécution avantageux du four selon la présente invention. Sur ces dessins et dans la suite du présent exposé, les organes ou parties du four qui sont identiques dans les deux modes de réalisation sont désignés par les mêmes références numérales.

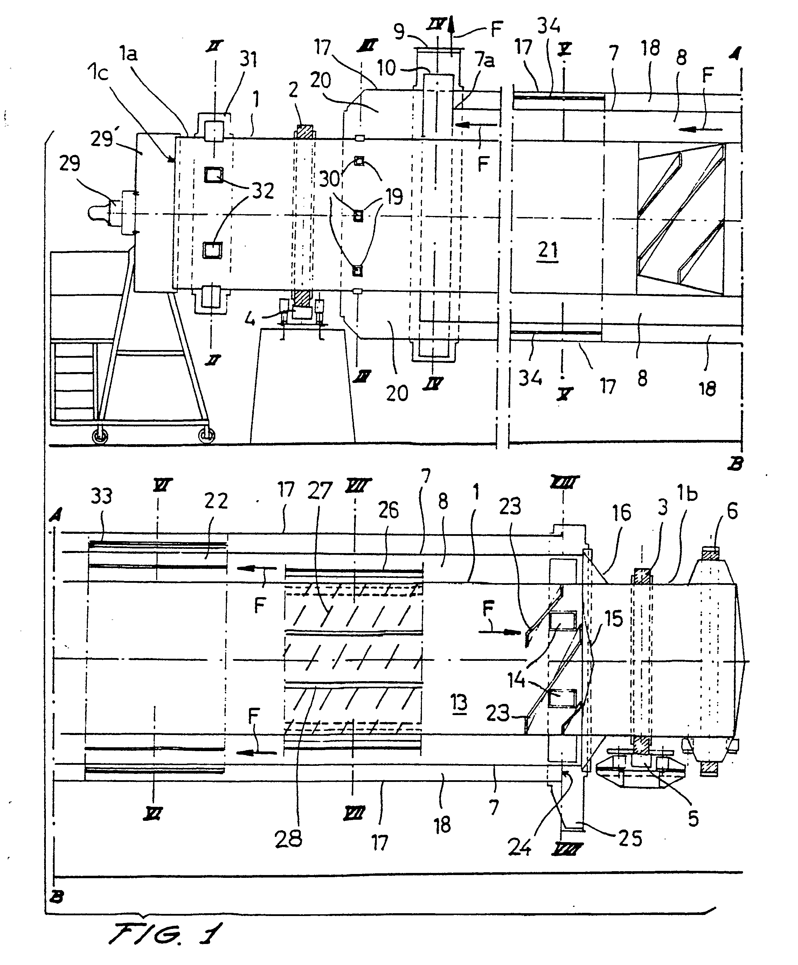

Ce four est illustré, dans son ensemble, aux figures 1 et 9. Il se compose essentiellement d'un grand corps tubulaire cylindrique tournant 1 pourvu, à proximité de son extrémité avant 1a et de son extrémité arrière 1b, d'anneaux périphériques de roulement, respectivement 2 et 3, prenant appui, de façon appropriée, sur des roulements 4 et 5, respectivement, par exemple constitués par des rouleaux. L'entraînement en rotation de ce corps tubulaire cylindrique 1 que l'on nommera "corps cylindrique central" dans la suite du présent exposé, est assuré par un moto, réducteur ou autre moteur convenable (non représenté sur les dessins) dont l'arbre de sortie porte un pignon qui engrène avec une couronne dentée 6 disposée autour dudit corps, pratiquement à l'extrémité arrière 1b de ce dernier.

Autour du corps cylindrique central 1, est monté, solidairement et coaxialement, un autre corps tubulaire cylindrique 7 que l'on nommera "corps cylindrique intermédiaire" dans la suite du présent exposé. Ledit corps 7 a une longueur moindre que celle du corps cylindrique central 1, cette longueur réduite couvrant la plus grande partie de la portée centrale de ce dernier, jusqu'à proximité des anneaux de roulement 2 et 3.

Entre le corps cylindrique central 1 et le corps cylindrique intermédiaire 7, est délimitée une chambre annulaire intermédiaire 8. Cette chambre communique, par son extrémité arrière, avec la chambre 13 ménagée à l'intérieur du corps 1, par l'intermédiaire de passages 14. Les extrémités postérieures des chambres 13 et 8 sont obturées par des parois 15 et 16, respectivement.

Suivant une caractéristique de l'invention, un troisième corps tubulaire cylindrique 17 que l'on nommera "corps cylindrique extérieur" dans la suite du présent exposé, est monté solidairement et coaxialement autour du corps cylindrique intermédiaire 7. Entre le corps cylindrique intermédiaire 7 et le corps cylindrique extérieur 17, est délimité un espace annulaire 18 constituant une chambre d'évacuation qui s'étend de l'avant vers l'arrière, respectivement d'une zone où sont ménagées les ouvertures de sortie 19 prévues dans la portion avant du corps cylindrique central 1 jusqu'à une zone entourant l'extrémité arrière du corps cylindrique intermédiaire 7.

Le corps cylindrique extérieur 17 entoure ainsi la totalité du corps cylindrique intermédiaire 7 à partir de l'extrémité arrière de ce dernier, de sorte que la chambre d'évacuation 18 entoure également la chambre intermédiaire 8 sur la totalité de la longueur de cette dernière. En outre, la partie antérieure du corps tubulaire cylindrique extérieur qui se trouve disposée en avancée par rapport à l'extrémité avant 7a du corps tubulaire cylindrique intermédiaire 7 et à la chambre 8, délimite une enceinte de communication 20 disposée autour d'une portion du corps central 1 dotée des ouvertures de sortie 19. Cette enceinte permet d'établir une communication directe, par l'intermédiaire desdites ouvertures, entre l'intérieur 13 du four ou, plus précisément, entre le foyer 21 et la chambre d'évacuation 18. On observe, de plus, que les ouvertures de sortie 19 sont ménagées dans une zone relativement avancée du foyer 21.

La présence du corps extérieur 17 et de la chambre annulaire d'évacuation 18 est très avantageuse. En effet, lorsque le plâtre cuit franchit les ouvertures de sortie 19, il est contraint à circuler à travers ladite chambre d'évacuation, dans un sens identique à celui du cheminement du matériau brut qui pénètre dans la chambre intermédiaire 8, au lieu de passer directement dans une trémie collectrice. De la sorte, une quantité importante de la chaleur contenue dans la masse de plâtre cuit circulant dans la chambre 18 est transférée au plâtre venant d'être enfourné et circulant dans la chambre 8, ce qui confère un bénéfice thermique très intéressant et des avantages secondaires inhérents à ce résultat. On précise, à ce sujet, que la température moyenne du plâtre sortant par les ouvertures 19 est de 600°C environ, cette précision faisant bien ressortir l'importance du résultat précédemment signalé. En outre, le plâtre cuit se trouve refroidi, lors de son parcours dans la chambre 18, par le cheminement du matériau brut à travers la chambre concentrique 8.

Suivant l'exemple de réalisation illustré plus particulièrement aux figures 1 à 8, l'introduction du plâtre brut ou gypse dans la chambre 8 s'effectue directement par l'intermédiaire d'une trémie d'entrée 9 que l'on nommera ""trémie d'entrée directe"" dans la suite du présent exposé, compte tenu du fait qu'elle donne directement accès à une pluralité de bouches d'entrée 10 par exemple au nombre de six, distribuées en alignement circulaire, dans le même plan vertical, autour du corps cylindrique intermédiaire 7. La distribution en cascade de ces bouches d'entrée 10 est très utile, car elle permet d'éviter, dans une très large mesure, la chute à l'extérieur du matériau en cours d'enfournement, ce qui représente une économie intéressante de travail de récupération.

Après son entrée dans la chambre intermédiaire 8, le matériau circule d'une extrémité à l'autre de ladite chambre, jusqu'à la zone arrière du four où il atteint les passages 14 qu'il est contraint de traverser et qui donnent accès à la chambre intérieure 13 du four à l'entrée de laquelle son sens de circulation est inversé de sorte que ledit matériau est ensuite acheminé vers l'avant dudit four où se trouve le foyer 21.

On précise que, de préférence, l'ensemble des corps cylindriques qui constituent le four, est disposé de manière à présenter une inclinaison de l'ordre de 1,5 % et qui descend depuis l'extrémité avant 1a jusqu'à l'extrémité arrière opposée 1b dudit four. Cette disposition favorise l'avance du matériau lorsqu'il vient d'être enfourné par l'intermédiaire des bouches d'entrée 10 et qui doit, dans un premier temps, se diriger vers l'extrémité arrière du four en parcourant la chambre 8.

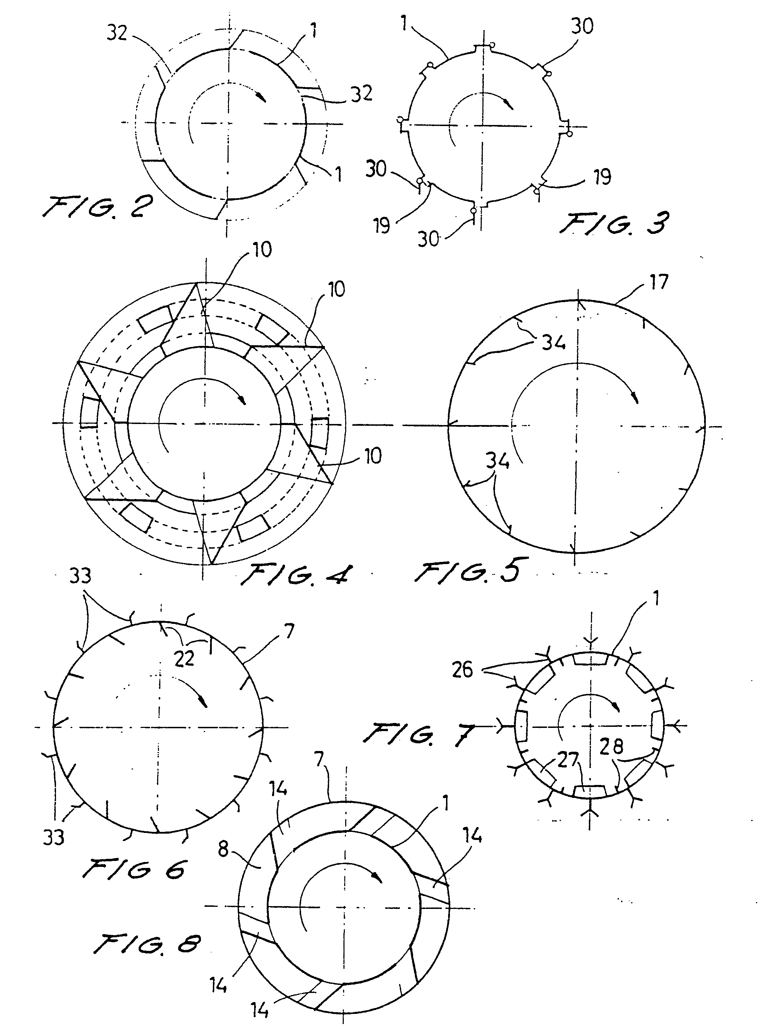

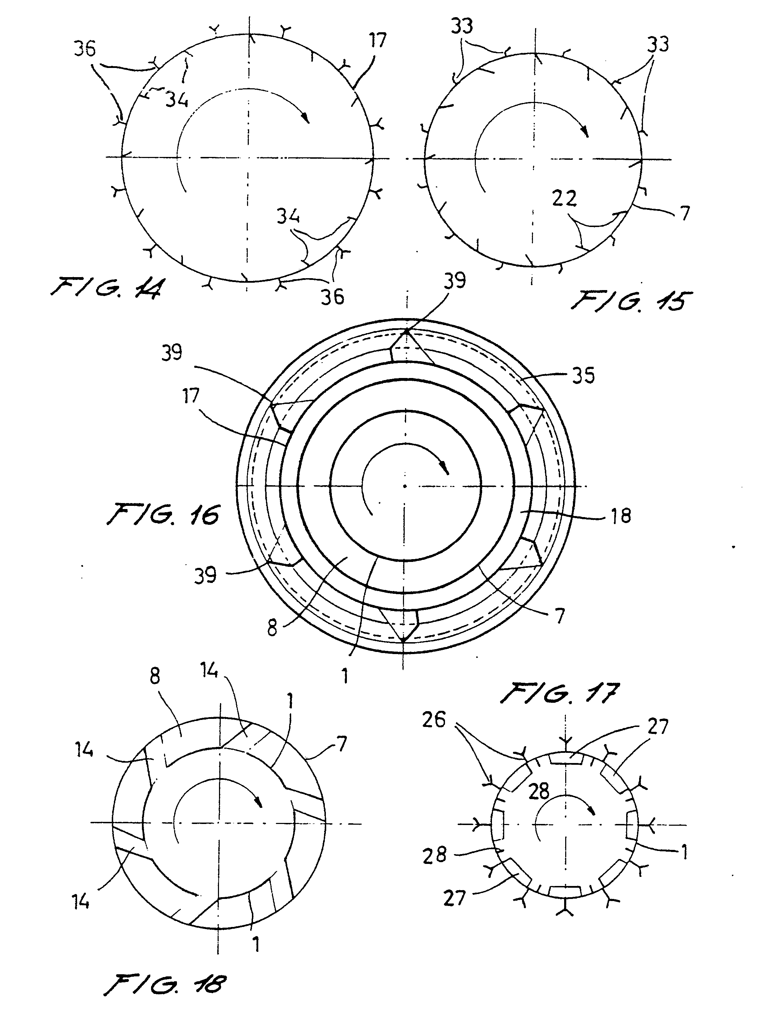

On note, dans cette chambre 8, la présence d'ailettes longitudinales inclinées 22 solidaires de la face interne du corps tubulaire cylindrique intermédiaire 7 et qui s'étendent depuis la zone du foyer 21 jusqu'à proximité de l'extrémité postérieure de ladite chambre où se trouvent les passages 14 qui mettent cette dernière en communication avec l'intérieur 13 du corps tubulaire cylindrique central 1. Les figures 6 et 15 qui sont, respectivement, des coupes selon la ligne VI - VI de la figure 1 et suivant la ligne XV - XV de la figure 9, conventionnellement limitées au corps cylindrique intermédiaire 7, montrent bien la forme et la disposition desdites ailettes longitudinales inclinées 22.

D'autre part et comme illustré aux figures 1, 6, 9 et 15, le corps cylindrique intermédiaire 7 est pourvu, sur sa face externe, d'ailettes longitudinales 33 dotées d'une forme inclinée particulière et ayant pour rôle de propulser le plâtre cuit, après son passage au travers des ouvertures de sortie 19, en direction de l'arrière, d'une extrémité à l'autre de la chambre d'évacuation 18, jusqu'à l'orifice annulaire d'évacuation 24 constitué par l'extrémité postérieure ouverte de ladite chambre et qui débouche dans une trémie de sortie 25.

En outre, des ailettes bifides 26 s'étendent également longitudinalement dans la chambre intermédiaire 8. Ces ailettes longitudinales 26 sont solidaires de la face externe du corps cylindrique central 1 et coopèrent avec les ailettes longitudinales inclinées 22 mentionnées précédemment.

A l'intérieur du corps tubulaire cylindrique central 1 et solidaires de la face interne de ce dernier, sont disposées des pales 27 se présentant sous forme de sections de courte longueur et toutes inclinées dans le même sens. Ces pales sont disposées alternativement, dans la direction transversale, et forment des alignements rectilignes, dans la direction longitudinale. Des ailettes continues 28 s'étendant également suivant la direction longitudinale du corps 1, sont disposées en alternance avec les alignements longitudinaux de pales 27 précités. Ces pales et ailettes permettent d'assurer que le matériau en cours de traitement reste dans le four durant le laps de temps nécessaire, lorsqu'après avoir traversé les passages 14, ledit matériau poursuit son chemin à l'intérieur du four, par une circulation à l'intérieur du corps tubulaire 1, en direction de l'extrémité avant dudit corps pour atteindre les ouvertures de sortie 19. Cette disposition des pales 27, combinée avec celle des ailettes longitudinales continues 28, est en effet très efficace pour freiner l'avance du matériau en direction des ouvertures de sortie 19, avec pour résultat que le degré de cuisson atteint est toujours celui prévu pour l'obtention du plâtre du type désiré.

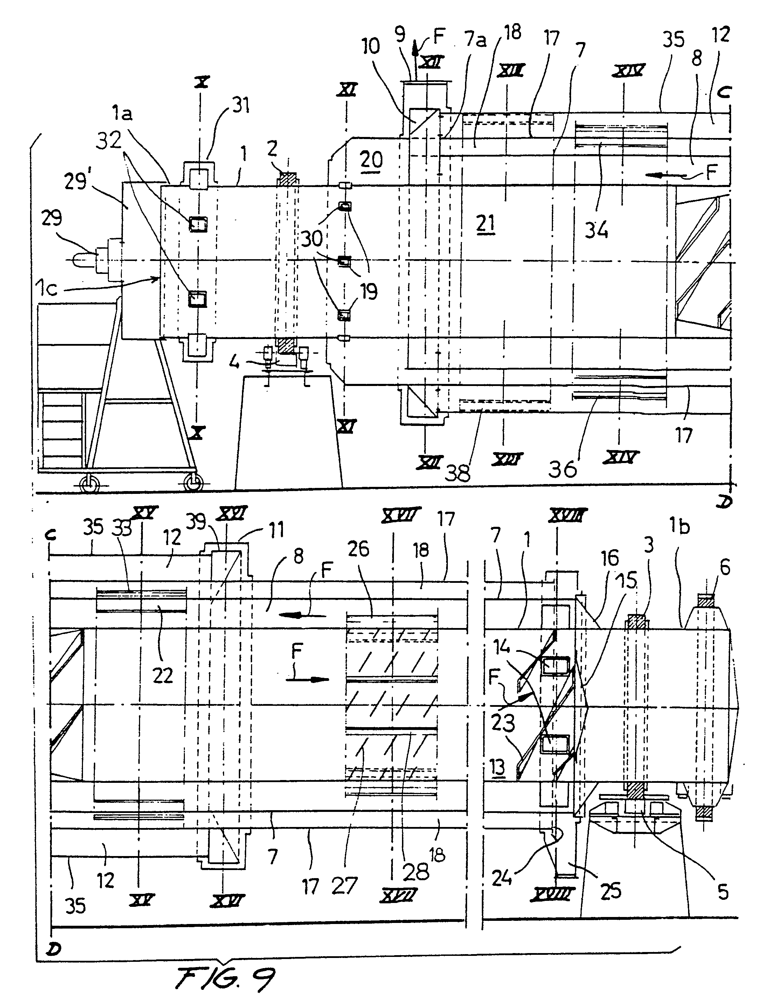

Les figures 7 et 17, qui sont, respectivement, une vue en coupe transversale suivant la ligne VII - VII de la figure 1, et une vue en coupe transversale selon la ligne XVII - XVII de la figure 9, conventionnellement limitées au corps cylindrique central 1, illustrent bien la forme et la disposition des ailettes bifides 26, des pales 27, et des ailettes longitudinales continues 28. On signale aussi, comme éléments importants contribuant à l'obtention d'une meilleure cuisson, la présence d'ailettes hélicoïdales 23 disposées en alternance avec les passages 14. Ces ailettes 23 ont pour fonction d'acheminer efficacement le matériau en cours de traitement vers l'avant du corps central 1, au moment où le sens de circulation dudit matériau provenant de la chambre 8 doit être inversé, de façon à le diriger en direction du foyer 21.

Les figures 8 et 18, qui sont, respectivement, une vue en coupe transversale suivant la ligne VIII - VIII de la figure 1, et une vue en coupe transversale selon la ligne XVIII - XVIII de la figure 9, illustrent la disposition des passages 14 mentionnés ci-dessus, ces vues étant conventionnellement limitées aux corps central 1 et intermédiaire 7.

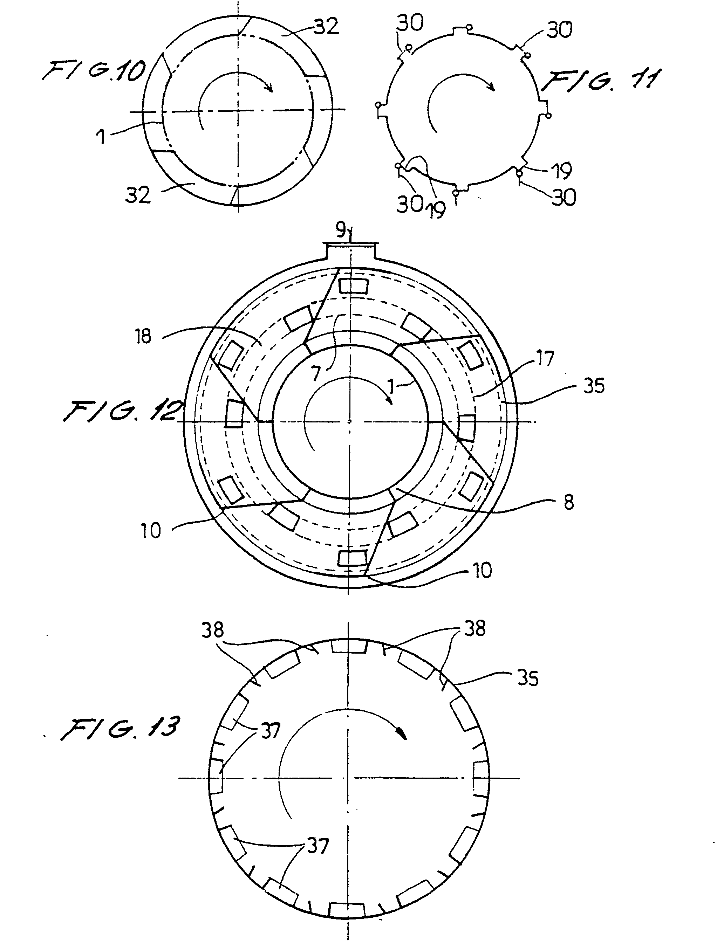

Suivant une technique connue, le foyer 21 comporte, de préférence, une paroi interne de forme conique recouverte d'un matériau réfractaire. Un brûleur 29 est disposé en regard du bord frontal ouvert 1a du corps 1. Ce brûleur est monté dans un porte-brûleur 29' et il possède, de façon connue en soi, les caractéristiques techniques les mieux appropriées pour la fonction qu'il doit assurer, surtout en ce qui concerne la régulation efficace de son action, de manière à obtenir, dans chaque cas particulier, les effets de cuisson recherchés. Les ouvertures de sortie 19 ménagées dans le corps tubulaire intérieur 1, sont situées dans la zone intermédiaire du foyer 21 et sont surmontées par la portion avant du corps tubulaire cylindrique extérieur 17. De préférence, il est prévu huit ouvertures de sortie 19 distribuées régulièrement sur la surface cylindrique du corps 1. Comme le montrent les figures 3 et 11 qui sont, respectivement, une vue en coupe transversale suivant la ligne III - III de la figure 1, et une vue en coupe transversale selon la ligne XI - XI de la figure 9, passant par la zone des ouvertures 19, et conventionnellement limitées à la représentation du corps central 1, ces dernières sont équipées de volets 30 librement articulés qui s'ouvrent et se ferment successivement, entraînés par leur propre poids, sous l'effet de la pesanteur, durant la rotation du corps tubulaire 1. Les ouvertures de sortie 19 débouchent dans la chambre de communication annulaire 20 précédemment décrite.

A proximité de l'extrémité avant 1a du corps tubulaire central 1, c'est-à-dire à proximite de l'ouverture frontale 1c de ce corps où est monté le brûleur fixe 29, est prevue une ouverture d'entrée supplémentaire 31 jusqu'à laquelle sont acheminées les poussières de matériau insuffisamment cuites qui sont prealablement récupérées, à l'aide de filtres appropriés, dans la trémie d'entrée directe 9 par laquelle sortent les gaz qui entraînent en suspension des particules très légères de gypse ou plâtre brut n'ayant pas été cuites normalement. Afin de ne pas compliquer inutilement la description et les dessins, on n'a pas represente ni decrit les moyens qui permettent de recueillir les gaz à leur sortie de la trémie d'entrée directe 9, ni les moyens de filtration desdits gaz, ni les moyens permettant d'acheminer les particules de plâtre brut ou incomplètement cuites récupe, rées jusqu'à l'entrée supplémentaire 31, compte tenu du fait que ces divers moyens simples appartiennent à un secteur technique distinct de celui de l'invention.

L'entrée supplémentaire 31 donne accès à au moins une bouche d'introduction et, de préférence, à une pluralité de bouches d'introduction 32 disposées entre les bouches de sortie 19 et l'ouverture frontale 1c du corps cylindrique central 1 et à proximité de cette dernière. Ces bouches d'introduction supplémentaires 32, par exemple au nombre de six, débouchent dans la partie antérieure du foyer et, sont, de préférence, distribuées régulièrement, en alignement circulaire, sur la surface cylindrique du corps tubulaire central 1, cet agencement favorisant la bonne introduction du matériau récupéré à traiter dans ledit corps et, plus précisément, dans le foyer 21.

Grâce à la situation des ouvertures d'introduction supplémentaires 32, le matériau récupéré de la façon indiquée précédemment, accomplit un parcours de longueur réduite durant son processus de cuisson, lequel est souhaitable aussi bien en raison des dimensions réduites des particules récuperées, qu'en raison du fait que ces particules ont déjà été soumises à un traitement de cuisson partielle antérieur, Le plâtre de récupération se mélange rapidement, durant son parcours de longueur réduite, au plâtre qui a effectué le trajet normal complet par un cheminement dans les deux sens à travers les chambres 8, 13 et 21 du four, de sorte que ledit plâtre de récupération, par l'intermédiaire des ouvertures de sortie 19, passe également dans l'enceinte de communication 20 pour s'acheminer, en traversant la chambre d'évacuation 18, vers la trémie de sortie 25.

On observe que cette récupération de matériau constitue un autre avantage économique intéressant en faveur du four rotatif selon l'invention.

Dans la chambre d'évacuation 18 sont encore disposées des ailettes longitudinales inclinées 34 solidaires de la face interne du corps tu, bulaire extérieur 17 et coopérant avec les ailettes 33 pour entraîner le plâtre cuit en direction de la trémie de sortie 25.

Les figures 5 et 14 sont des vues en coupe transversale selon les lignes V - V de la figure 1 et XIV - XIV de la figure 9, respectivement, montrant la forme et la disposition des ailettes 34, ces vues étant conventionnellement limitées à la représentation du corps cylindrique extérieur 17 portant lesdites ailettes.

Le deuxième exemple de réalisation du four selon la présente invention plus particulièrement illustré aux figures 9 à 18, se caractérisé par un rendement encore meilleur.

Ce four comprend la structure générale et les caractéristiques du mode d'exécution précédemment décrit. Il comporte, en outre, un quatrième corps tubulaire cylindrique 35 que l'on nommera ""corps tubulaire périphérique"" dans la suite du présent exposé, et qui est monté solidairement et coaxialement autour du corps tubulaire cylindrique extérieur 17. Entre le corps extérieur 17 et le corps périphérique 35, est ménagée une chambre préliminaire 12 destinée à réaliser un préchauffage du plâtre brut dès son introduction dans le four, Cet agencement complémentaire qui ne change pas la structure générale du four telle que précédemment décrite, a pour but de tirer parti de la chaleur qui se dissipe radialement de la chambre d'évacuation 18 au travers de la paroi latérale du corps tubulaire cylindrique extérieur 17. A cet effet, le corps tubulaire périphérique 35 recouvre ledit corps extérieur 17 sur une portion de ce dernier allant de la zone où sont disposées les bouches d'entrée 10 à un point de la zone médiane de la longueur totale du four où est placée une trémie d'entrée 11 donnant accès à la chambre de préchauffage 12, Suivant ce mode d'exécution, on comprend que les bouches d'entrée 10 reçoivent le plâtre provenant de la chambre de préchauffage 12, au lieu de le recevoir directement de la trémie d'entrée directe 9 qui, dans ce cas, n'est pas utilisée.

A l'intérieur de la chambre de prèchauffage 12, sont disposés des moyens permettant d'acheminer le gypse ou pierre à plâtre introduit dans la trémie 11, jusqu'aux bouches d'entrée 10. Ces moyens comprennent, par exemple, des ailettes longitudinales bifides 36 solidaires de la face extérieure du corps tubulaire extérieur 17. Ces ailettes bifides 36 coopèrent avec des pales spèciales 37 et des ailettes 38 solidaires de la face interne du corps tubulaire périphérique 35. Les pales 37 se présentent sous forme de plans inclinés de courte longueur. Ces pales qui sont toutes inclinées dans le même sens sont disposées alternativement, dans la direction transversale, et forment des alignements rectilignes, dans la direction longitudinale. D'autre part, les ailettes 38 sont continues et disposées longitudinalement, les ailettes 38 étant disposées en alternance avec les alignements longitudinaux de pales 37.

La figure 14 mentionnée précédemment montre les ailettes bifides 36 en coupe transversale, tandis que la figure 13 est qui une coupe transversale suivant la ligne XIII - XIII de la figure 9, illustre la forme et la disposition des pales 37 et des ailettes continues 38. Les figures 4 et 12 sont des vues en coupe transversale, respectivement selon la ligne IV - IV de la figure 1 et suivant la ligne XII - XII de la figure 9, montrant plus particulièrement la zone dotée des ouvertures d'entrée 10 qui reçoivent le matériau brut provenant, soit de la trémie d'entrée directe 9, soit de la trémie d'entrée indirecte 11 par l'intermédiaire de la chambre de préchauffage 12.

La figure 16 est une vue en coupe transversale selon la ligne XVI - XVI de la figure 9 et sur laquelle on peut voir les bouches d'entrée 39 donnant accès à la chambre de préchauffage 12, lesquelles sont disposées dans le même plan vertical que la trémie 11 et sont destinées à recevoir le matériau brut introduit dans ladite trémie. De façon comparable aux bouches d'entrée directe 10, il est prévu une pluralité de bouches d'entrée 39, de préférence six bouches d'entrée 39, disposées à intervales réguliers et en alignement circulaire. Cette distribution "en cascade"" des bouches d'entrée 39 a pour avantage, comme indiqué précédemment, que le matériau qui peut tomber par suite de l'engorgement de l'une d'elles, est recueilli par la bouche d'entrée suivante. De la sorte, on évite que des quantités relativement importantes de matériau brut ne tombent hors du four lors de son chargement et le travail supplémentaire résultant de la récupération de ce matériau.

Le four rotatif suivant l'invention fonctionne de la manière suivante. L'ensemble des corps tubulaires cylindriques 1, 7, 17 (figures 1 à 8) et 35 (figures 9 à 18) coaxiaux et rigidement solidaires entre eux, tourne de manière continue sous l'action d'un moteur ou d'un motoréducteur approprié (non représenté) qui assure l'entraînement en rotation de la couronne dentée 6 rigidement solidaire dudit ensemble. Dans la mise en oeuvre du mode d'exécution du four illustré aux figures 1 à 8, le plâtre brut est introduit par la trémie d'entrée directe 9 après avoir été broyé de façon convenable, comme cela se pratique habituellement pour les fours de ce type. Le matériau brut accède ainsi directement aux bouches d'entrée 10 et, par l'intermédiaire de ces dernières, à la chambre intermédiaire 8.

Dans la mise en oeuvre du mode de réalisation plus complet représenté aux figures 9 à 18, le plâtre brut convenablement broyé est d'abord déversé dans la trémie 11 qui permet son introduction, à travers les bouches d'entrée 39, dans la chambre de préchauffage 12. Le matériau est entrainé, par l'action des ailettes 36, 38 et des pales 37, en direction des bouches d'entrée 10, et il reçoit un premier apport calorifique lors de son trajet dans la chambre de préchauffage 12. Il passe ensuite dans la chambre 8, par l'intermédiaire des bouches d'entrée 10. A partir de là, le cheminement du matériau est identique pour les deux modes d'exécution du four.

Le matériau pénétrant dans la chambre intermédiaire 8 est acheminé, d'une extrémité à l'autre de ladite chambre, en direction des passages 14, sous l'effet combiné de la légère inclinaison de cette dernière et de l'action des ailettes 22 et 26. Lors de ce parcours, il reçoit un nouvel et/ou important apport calorifique, la chambre annulaire 8 étant en effet placée entre la chambre centrale 13 du four dont la portion antérieure constitue le foyer proprement dit 21 et la chambre annulaire 18 d'évacuation du plâtre cuit sortant dudit foyer. Les flèches F indiquent le sens de circulation des gaz lors de leur èvacuation, ces gaz sortant à l'extérieur par la trémie 9.

Le matériau dont la température a été élevée de manière importante lors de son trajet dans la chambre 8 (figures 1 à 8) et de façon encore plus importante durant son trajet dans les chambres 12 et 8 (figures 9 à 18) pénètre ensuite dans la chambre 13 du corps cylindrique central 1, après avoir traversé les passages 14, et son sens de circulation est alors inversé afin qu'il puisse être acheminé en direction du foyer 21 sous l'action des pales 27 et des ailettes 28. On souligne tout particulièrement la disposition soigneusement étudiée de cette installation de cuisson grâce à laquelle on obtient une longueur rotale minimum du four pour un parcours de longueur maximum à l'intérieur dudit four. D'autre part, la disposition spéciale soigneusement ètudiée des pales, ailettes et hélices précédemment décrites, permet de maintenir le matériau en situation de traitement durant un laps de temps maximum, à l'intérieur du four, ce qui procure un rendement très supérieur à celui des fours rotatifs classiques. Le plâtre traité à l'aide du four selon l'invention atteint les ouvertures de sortie 19 à une température qui est toujours de l'ordre de 600°C. Cette température est également atteinte par le plâtre en poudre introduit lateralement dans le four, par l'entrée 31. Le plâtre passe ensuite dans l'enceinte de communication 20, par l'intermédiaire des ouvertures de sortie 19, puis dans la chambre d'évacuation 18 où s'amorce son refroidissement et qu'il parcourt en direction de la partie arrière du four, en transmettant une partie de sa chaleur au matériau brut circulant dans la chambre intermédiaire 8 et, suivant le mode d'exécution illustré aux figures 9 à 18, dans la chambre de préchauffage 12.

Enfin, le plâtre cuit quitte le four, par l'ouverture de sortie 24 débouchant dans la tremie de sortie 25. A sa sortie du four, le plâtre cuit présente une température comprise entre 130° et 150°C, approximativement, beaucoup plus appropriée pour les opérations ultérieures auxquelles il peut être soumis, notamment pour les mélanges et les manipulations de conditionnement.

**Revendications**

1. - Four rotatif à haut rendement calorifique, pour la fabrication de plâtres, du genre comprenant un grand corps tubulaire cylindrique tournant (1) ou corps central, pourvu d'une ouverture frontale (1c) et obturé à l'une de ses extrémités ou extrémité arrière (1b), ce corps central étant coaxialement solidaire d'un second corps tubulaire cylindrique (7) de diamètre plus important et de moindre longueur, qui s'étend sur la plus grande partie de la portée centrale dudit grand corps tubulaire cylindrique (1), ces deux corps tournants délimitant, entre eux, une chambre annulaire intermédiaire (8) dont l'extrémité avant est munie d'au moins une bouche d'entrée (10) pour le passage du matériau a traiter introduit par une trémie d'enfournement (9, 11) et dont l'extrémité arrière communique avec l'intérieur (13) dudit corps central (1) par l'intermédiaire de passages (14), ledit four comprenant encore : - des moyens (22, 26; 27, 28) destinés à assurer le cheminement du matériau en cours de traitement et disposés respectivement à l'intérieur de ladite chambre annulaire et dudit corps central, sur le trajet dudit matériau; - un foyer (21) ménagé dans la partie avant du corps central (1); - un brûleur (29); - au moins une ouverture de sortie (19) pour le matériau traité, également disposée dans la portion avant dudit corps central; - des moyens d'appui (2, 3; 4, 5); - et des moyens permettant son entraînement en rotation (6), caractérisé en ce qu'il comprend un troisième corps tubulaire cylindrique (17) ou corps extérieur disposé, coaxialement, autour dudit second corps tubulaire cylindrique (7) ou corps intermédiaire, ces corps intermédiaire (7) et extérieur (17) étant rigidement solidaires et délimitant, entre eux, une chambre annulaire d'évacuation (18), et en ce qu'une portion dudit corps extérieur (17) est disposée en avancée par rapport à l'extrémité antérieure (7a) du coprs intermédiaire (7), cette portion disposée en avancée délimitant une enceinte annulaire (20) disposée autour d'une portion du corps central (1) pourvue d'au moins une ouverture de sortie (19), cette enceinte annulaire établissant une communication directe, par l'intermédiaire de ladite ouverture de sortie, entre le foyer (21) et ladite chambre d'évacuation dont la partie arrière débouche, par l'intermédiaire d'un orifice d'évacuation (24), dans une trémie de sortie (25).

2. - Four rotatif selon la revendication 1, caractérisé en ce que le corps cylindrique extérieur (17) entoure le corps cylindrique intermédiaire (7) sur la totalité de la longueur de ce dernier, tandis que la chambre d'évacuation (18) entoure la chambre intermédiaire (8) sur la totalité de la longueur de cette dernière.

3. - Four rotatif suivant la revendication 1, caractérisé en ce que l'accès à la chambre intermédiaire (8) est assuré par une pluralité de bouches d'entrée (10), par exemple au nombre de six, distribuées en alignement circulaire autour du corps intermédiaire (7), de façon que leurs réceptacles soient disposés en cascade.

4. - Four rotatif selon l'une quelconque des revendications 1 à 3, caractérisé en ce qu'il comporte un quatrième corps tubulaire cylindrique (35) ou corps périphérique disposé, coaxialement, autour du corps extérieur (17), ledit corps périphérique étant rigidement solidaire de l'ensemble des autres corps cylindriques tournants (1, 7, 17) et délimitant, avec ledit corps extérieur (17), une chambre annulaire de préchauffage (12) dont l'accès est assuré par au moins une bouche d'entrée (39) disposée à l'une des extrémités de ladite chambre de préchauffage pour l'enfournement du matériau à traiter introduit par la trémie d'enfournement (11); l'autre extrémité de ladite chambre de préchauffage communiquant avec la chambre intermédiaire (8) entourée par la chambre annulaire d'évacuation (18), par l'intermédiaire de la ou des bouches d'entrée (10) donnant accès à ladite chambre intermédiaire.

5. - Four rotatif selon la revendication 4, caractérisé en ce que l'accès à la chambre de préchauffage (12) est assuré par une pluralité de bouches d'entrée (39), par exemple au nombre de six, distribuées en alignement circulaire autour du corps périphérique (35), de façon que leurs réceptacles soient disposés en cascade.

6. - Four rotatif suivant la revendication 1, caractérisé en ce que la face interne du corps cylindrique intérieur (1) est munie de pales (27) et d'ailettes (28) disposées de façon appropriée pour assurer l'avance du matériau en cours de cuisson, depuis l'arrière dudit corps intérieur jusqu'au foyer dudit four.

7. - Four rotatif selon l'une des revendications 1 ou 6, caractérisé en ce que la face externe du corps cylindrique intermédiaire (7) et la face interne du corps cylindrique extérieur (17) sont munies d'ailettes (33, 34) appropriées pour assurer l'acheminement du plâtre cuit à travers la chambre d'évacuation (18), jusqu'à l'orifice d'évacuation (24) débouchant dans la trémie de sortie (25).

8. - Four rotatif suivant l'une quelconque des revendications 4 à 7, caractérisé en ce que la face externe du corps cylindrique extérieur (17) et la face interne du corps cylindrique périphérique (35) sont munies d'ailettes (36, 38) et de pales (37) appropriées pour assurer l'acheminement du matériau brut à travers la chambre de préchauffage (12), en direction des bouches d'entrée (10) donnant accès à la chambre intermédiaire (8).

9. - Four rotatif suivant la revendication 1, caractérisé en ce que la portion du corps cylindrique central (1) entourée par l'enceinte annulaire de communication (20) et correspondant à la partie antérieure du foyer (21), est pourvue d'une pluralité d'ouvertures de sortie (19), par exemple au nombre de huit, ces ouvertures étant munies de volets (30) librement articulés, de façon à pouvoir s'ouvrir et se fermer, successivement, en pivotant sous l'effet de la pesanteur, durant la rotation de l'ensemble tournant (1 - 7 - 17).

10. - Four rotatif selon l'une des revendications 1 ou 9, caractérisé en ce que la portion antérieure du corps cylindrique intérieur (1) constitue le foyer proprement dit (21) lequel est chauffé au moyen d'un brûleur fixe (29) disposé en regard de l'ouverture frontale (1c) dudit corps, et en ce que, à proximité de ladite ouverture frontale est ménagée une entrée suppplémentaire (31) donnant accès à au moins une bouche d'introduction et, de préférence, à une pluralité de bouches d'introduction (32) distribuées en alignement circulaire sur la face cylindrique du corps cylindrique intérieur, et disposées entre ladite ouverture frontale (1c) et la ou les ouvertures de sortie (19); cette entrée étant destinée à l'enfournement des poussières ou particules fines de matériau incomplètement cuites récupérées à la sortie (9) des gaz de cuisson, au moyen d'un filtre approprié.

11. - Four rotatif selon la revendication 1, dans lequel les moyens d'appui sont constitués par des anneaux de roulement (2, 3) qui portent sur des roulements, par exemple constituées par des rouleaux (4, 5), caractérisé par le fait que lesdits anneaux de roulement (2, 3) sont fixés sur le corps tubulaire cylindrique intérieur (1), à proximité de ses extrémités avant (1a) et arrière (1b), dans des zones non recouvertes par le corps tubulaire cylindrique extérieur (17).

**Claims**

1.- Rotating kiln of high caloric power designed for the manufacture of plasters in the kind which comprises a large rotating cylindrical tubular body (1) or central body provided with a frontal opening (10) being plugged at one of its ends or

rear end (1b); said central body besing coaxially integral to a second cylindrical tubular body (7) with a larger diameter and shorter lengh, which is extended along most of the central span of said large cylindrical tubular body (1); said two rotating bodies confining between them an intermediate annular chamber (8), the front end of which is being provided at least with a leading opening (10) for the flowing into of the material to be treated and driven by a charging hopper (9,11) and the rear end is connected to the inside (13) of said central body (1) by means of the passages (14) and said kiln additionally oomprising: some means (22, 28; 27, 28) arranged so as to ensure the flow of the material while being treated and respectively arranged inside of said annular chamber and said central body in the routing of said material; a firebox (21) arranged at the frontal portion of the central body (1); a burner (29); at least a trailing opening (19) for the material being treated, equally engaged into the frontal portion of said central body; some supporting means (2, 3; 4, 5) and other means allowing a rotating operation (8), characterized in that it comprises a third cylindrical tubular body (17) or external body coaxially engaged around said seoond cylindrical tubular body (7) or intermediate body; being said intermediate body (7) and external body (17) rigidly integral and confining between them a delivery annular chamber (18) and in that a portion of said external body (17) is arranged in projection as related to the frontal end (7a) of the intermediate body (7), said portion being arranged in projection confining an annular enclosure (20) provided around a portion of the central body (1) at least being provided with a trailing opening (19) and said annular enclosure setting up a direct connection by means of said trailing opening, between the firebox (21) and said delivery chamber, the rear end of which going into the trailing hopper (25) by means of a delivery opening (24).

2.- Rotating kiln according to claim 1, characterized in that an external cylindrical body (17) surrounds an intermediate cylindrical body (7) on the overall length of the latter, while a delivery chamber (18) surrounds an intermediate chamber (8) on the overall length of the latter.

3.- Rotating kiln according to claim 1, characterized in that the introduction into an intermediate chamber (8) is secured by a plurality of leading openings (10) e.g. in the number of six, circularly aligned and distributed around an intermediate body (7) in a way such as its containers are being engaged in cascade.

4.- Rotating kiln according to any one of the claims 1 to 3, oharacterized in that it comprises a fourth oylindrical tubular body (35) or peripheral body coaxially arranged around an external body (17) being said peripheral body rigidly integral to the assembly of other rotating cylindrical bodies (1, 7, 17) and confining with said external body (17) a preheating annular chamber (12), the introduction into which is being secured at least by a leading opening (39) arranged at one of the ends of said preheating chamber for charging into the kiln the material to be treated and brought into by the charging hopper (11); the other end of said preheating chamber being connected to the intermediate chamber (8) surrounded by a delivery annular chamber (18) by means of the leading opening or openings (10) giving access to said intermediate chamber.

5.- Rotating kiln according to claim 4, characterized in that the introduction into the preheating chamber (12) is being secured by a plutality of leading openings (39) e.g. in the number of six, circularly aligned and distributed around a peripheral body (35) in a way such as its containers are being engaged in cascade.

6.- Rotating kiln according to claim 1, characterized in that the inside faoe of an internal cylindrical body (1) is provided with blades (27) and wings (28) suitably arranged to secure material flowing while being burned from the rear of said internal body to the firebox of said kiln.

7.- Rotating kiln according to any of the claims 1 or 6, characterized in that the external face of an intermediate cylindrical body (7) and the internal face of an external cylindrical body (17) are provided with suitable wings (33,34) to secure burned plaster flowing through a delivery chamber (18) up to a delivery opening (24) which goes into a trailing hopper (25).

8.- Rotating kiln according to any one of the claims 4 to 7, characterized in that the external face of an external cylindrical body (17) and the internal face of a peripheral cylindrical body (35) are provided with suitable wings (36, 38) and blades (37) to secure the raw material flowing through a preheating chamber (12) towards the leading openings (10) giving access to an intermediate chamber (8).

9.- Rotating kiln according to claim 1, characterized in that the portion of the central cylindrical body (1) surrounded by a connecting annular enclosure (20) and being associated to the frontal portion of a firebox (21) is provided with a plurality of trailing openings (19) e.g. in the number of eight, being these openings provided with freely pivoted flaps (30) in a way such as they might be successively opened and closed by pivoting under the effect of the laws of gravity in the rotation of the rotative unit (1-7-17).

10.- Rotating kiln according to any of the claims 1 or 9, characterized in that the frontal portion of an internal cylindrical body (1) makes up the firebox (21) itself which is being heated by means of a fixed burner (29) fitted opposite the frontal opening (1c) of said body, and in that near said frontal opening is being engaged a supplemental entrace (31) giving access at least to a leading opening and preferably to a plurality of leading openings (32) circularly aligned and distributed on the cylindrical side of an internal cylindrical body and arranged between said frontal opening (1c) and the trailing opening or openings (19); being said entrance designed for charging into the kiln fine particles or powders of incompletely burned material as they are being recovered at the venting (9) of the burning gases by means of a suitable filter.

11.- Rotating kiln according to claim 1, wherein the supporting means are made up with raceways (2, 3) provided with bearings, e.g. made up with the rollers (4, 5), characterized in that said raceways (2, 3) are fixedly secured at the internal cylindrical tubular body (1) near its frontal (1a) and rear (1b) ends in the areas being exposed by an external cylindrical tubular body (17).

**Patentansprüche:**

1.-Drehrohrofen zum Brennen von Gips mit hoher Wärmeleistung, mit einem sich drehenden großen rohrförmigen zylindrischen Körper (1) oder zentralen Körper, der eine stirnseitige Öffnung (1c) aufweist und an einem seiner Enden oder dem rückwärtigen Ende (1b) abgeschlossen ist, wobei dieser zentrale Körper mit einem zweiten rohrförmigen zylindrischen Körper (7) größeren Durchmessers und kleinerer Länge, der über den Großteil der Haupterstreckung des großen zentralen Körpers (1) reicht koaxial fest verbunden ist, diese beiden sich drehenden Körper eine zwischen ihnen liegende Zwischenringkammer (8) begrenzen, deren vorderes Ende mit mindestens einem Eintrittsstutzen (10) versehen ist, um zu verarbeitenden Werkstoff mittels eines Beschickungstrichters (9, 11) einzuführen und deren rückwärtiges Ende mit dem Inneren (13) des zentralen Körpers (1) über Durchtritte (14) verbunden ist, sowie mit:
- im Inneren der ringförmigen Kammer bzw.des zentralen Körpers angeordnete Vorrichtungen (22, 26; 27,28) zur Sicherung des Durchsatzes des Werkstoffes im Zuge der Verarbeitung dienend und
- einem im vorderen Teil des zentralen Körpers (1) vorgesehenen Feuerraum (21)
- einem Brenner (29),
- wenigstens einer ebenfalls im vorderen Teil des zentralen Körpers angeordneten Austrittsöffnung (19) für den verarbeiteten Werkstoff,
- Stützvorrichtungen (2, 3; 4, 5)
- und Vorrichtungen zum Rotationsantrieb (6),
dadurch gekennzeichnet, daß er einen dritten rohrförmigen zylindrischen Körper (17) oder äußeren Körper aufweist, der koaxial um den zweiten rohrförmigen zylindrischen Körper (7) oder mittleren Körper angeordnet ist, diese Körper, der mittlere (7) und der äußere (17), miteinander starr verbunden sind und eine zwischen ihnen liegende ringförmige Entleerungskammer (18) begrenzen, und, daß ein teil des äußeren Körpers (17) das vordere Ende (7a) des mittleren Körpers (7) überragt, wobei dieser überragende Teil einen um einen Teil des mit mindestens einer Austrittsöffnung (19) versehenen zentralen Körpers angeordneten ringförmigen Hohlraum begrenzt, der über die Austrittsöffnung eine direkte Verbindung zwischen dem Feuerraum (21) und der Entleerungskammer schafft, deren rückwärtiger Teil über eine Entleerungsöffnung (24) in einen Austrittsstutzen (25) mündet.

2.-Drehrohrofen gemäß Anspruch 1, dadurch gekennzeichnet, daß der äußere zylindrische Körper (17) den mittreren zylindrischen Körper (7) über dessen gesamte Länge umgibt, während die Entleerungskammer (18) die mittlere Kammer (8) über deren gesamte Länge umgibt.

3.-Drehrohrofen gemäß Anspruch 1, dadurch gekennzeichnet, daß der Zutritt zur mittleren Kammer (8) gewährleistet ist durch eine Mehrzahl von Eintrittsstutzen (10), z.B. sechs, in ringförmiger Anordnung um den mittleren Körper (7), dergestalt, daß ihre Auffangbereiche kaskadenförmige angeordnet sind.

4.-Drehrohrofen gemäß einem der Ansprüche 1 bis 3, dadurch gekennzeichnet, daß er einen vierten rohrförmigen zylindrischen Körper (35) oder Umfangskörper aufweist, welcher koaxial um den äußeren Körper liegt, wobei der Umfangskörper mit der Gesamtheit der anderen rohrförmigen zylindrischen Körper (1, 7, 17) starr verbunden ist und mit dem äußeren Körper (17) eine ringförmige Vorheizkammer (12) begrenzt, deren Zutritt gewährleistet ist durch mindestens einen an einer der Enden der Vorheizkammer angeordneten Eintrittsstutzen (39) für die Beschickung mit zu verarbeitendem Werkstoff über den Beschickungstrichter (11), wobei das andere Ende der Vorheizkammer mit der von der ringförmigen Entleerungskammer (18) umgebenen mittleren Kammer (8) über deren Eintrittsstutzen (10) in Verbindung steht.

5.-Drehrohrofen gemäß Anspruch 4 dadurch gekennzeichnet, daß der Zutritt zur Vorheizkammer (12) gewährleistet ist durch eine Mehrzahl von Eintrittsstutzen (39), z.B. sechs, in ringförmiger Anordnung um den Umfangskörper (35), dergestalt, daß ihre Auffangbereiche kaskadenförmig angeordnet sind.

6.-Drehrohrofen gemäß Anspruch 1, dadurch gekennzeichnet, daß die Innenseite des inneren zylindrischen Körpers (1) versehen ist mit Förderrippen (27) und Leitstegen (28), die so angeordnet sind, daß eine Vorwärtsbewegung des Werkstoffes während des Brennens vom rückwärtigen Teil des inneren Körpers bis zum Feuerraum des Ofens gewährleistet ist.

7.-Drehrohrofen gemäß der Ansprüche 4 oder 6, dadurch gekennzeichnet, daß die Außenseite des mittleren zylindrischen Körpers (7) und die Innenseite des äußeren zylindrischen Körpers (17) versehen sind mit Leitstegen (33, 34) für die Sicherstellung des Durchsatzes des gebrannten Gips durch die Entleerungskammer (18), bis zu der in den Ausgangsstutzen (25) mündenden Entleerungsöffnung (24).

8.-Drehrohrofen gemäß einem der Ansprüche 4 bis 7, dadurch gekennzeichnet, daß die Außenseite des äußeren zylindrischen Körpers (17) und die Innenseite des zylindrischen Umfangskörpers (35) versehen sind mit Leitstegen (36, 38) und Förderrippen (37) für die Sicherstellung des Durchsatzes des Rohmaterials durch die Vorheizkammer (12) in Richtung zu den Eintrittsstutzen (10) der mittleren Kammer (8).

9.-Drehrohrofen gemäß Anspruch 1, dadurch gekennzeichnet, daß der Teil des zentralen zylindrischen Körpers (1), der von dem ringförmigen Hohlraum (20) umgeben ist und der dem vorderen Teil des Feuerraums (21) entspricht, mit einer Mehrzahl von Austrittsöffnungen (19), z.B. acht, versehen ist, wobei diese Öffnungen mit frei schwenkbar gelagerten Klappen (30) verschließbar sind, die sich während der Rotation der sich drehenden Anordnung (1 - 7-17) nacheinander durch Verschwenken unter Einwirkung der Schwerkraft, öffnen und schließen.

10.-Drehrohrofen gemäß einem der Ansprüche 1 oder 9, dadurch gekennzeichnet, daß der vordere Teil des inneren zylindrischen Körpers (1) den eigentlichen Feuerraum (21) bildet, welcher mittels eines gegenüber der stirnseitigen Öffnung (1c) des Körpers angeordneten Brenners (29) beheizbar ist, und, daß nahe der stirnseitigen Öffnung ein zusätzlicher Eintritt (31) vorgesehen ist, der Zugang gibt zu zumindest einer, vorzugsweise zu mehreren ringförmig auf der zylindrischen Begrenzungsfläche des inneren zylindrische, Körpers verteilten, und zwischen der stirnseitigen Öffnung (1c) und der oder den Austrittsöffnung (en) (19) angeordneten Einfüllöffnungen (32), wobei dieser Eintritt der Beschickung mit Staub oder feinen Teilchen unvollkommen verbrannten, beim Verbrennungsgasaustritt (9) mittels eines geeigneten Filters gesammelten Materials dient.

11.-Drehrohrofen gemäß Anspruch 1, bei welchem die Stützvorrichtungen durch Rollenkränze (2, 3) gebildet sind, die sich auf, z.B. durch Rollen gebildete inneren zylindrischen Körper (1) nahe des vorderen (1a) und rückwärtigen (1b) Endes in von dem äußeren rohrförmigen zylindrischen Körper (17) freien Bereichen festgelegt sind.

FIG. 1

0 083 549

FIG. 2

FIG. 3

FIG. 4

FIG. 5

FIG 6

FIG. 7

FIG. 8

3

FIG. 9

FIG.10

32

1

32

FIG. 11

30

30

19

30 19

30

9

FIG. 12

18

7

1

17

35

10

8

10

FIG. 13

38

38

35

37

37

FIG. 14

FIG. 15

FIG. 16

FIG. 17

FIG. 18